# EUROPÄISCHE PATENTSCHRIFT

(11) **EP 1 936 250 B1**
(45) Veröffentlichungstag und Bekanntmachung des Hinweises auf die Patenterteilung: **07.07.2010**
(21) Anmeldenummer: 08152465.4
(22) Anmeldetag: 08.08.2005
(51) Int. Cl.: F16L 19/10

(54) **Metallischer Schneidring**
Metallic Cutting Ring
Bague coupante métallique

(30) Priorität: 10.08.2004 DE 202004012473 U
(43) Veröffentlichungstag der Anmeldung: 25.06.2008
(62) Teilanmeldung aus: 05777876.3
(73) Patentinhaber: VOSS Fluid GmbH, 51688 Wipperfürth (DE)
(72) Erfinder: Pott, Harald, 42499 Hückeswagen (DE); Schmidt, Harald, 51688 Wipperfürth (DE)
(74) Vertreter: Patentanwälte Dr. Solf & Zapf

(56) Entgegenhaltungen:
- DE-B- 1 167 608
- DE-B- 1 175 639
- GB-A- 1 117 987
- US-A- 2 406 488

## Beschreibung

Die vorliegende Erfindung betrifft einen metallischen Schneidring für eine Schraubverbindung zum abdichtenden Verbinden eines Rohres mit einem Anschlussteil, mit einem Rohranlageabschnitt und einem sich in axialer Richtung an den Rohranlageabschnitt anschließenden Schneidenabschnitt, wobei der Schneidenabschnitt einen vom äußeren Umfang des Schneidringes radial nach außen weisenden Anschlag mit einer quer zur Schneidring-Längsachse verlaufenden Anschlagfläche für das Anschlussteil aufweist.

Schraubverbindungen mit ähnlichen Ringen sind aus der DE-AS 1 167 608, der DE-AS 1 175 639, der GB 1 117 987 A und aus der US 2 406 488 bekannt, bei denen sich jedoch sämtlich der Anschlag für das Anschlagteil an der Stirnseite des Schneidringes befindet.

So ist in der DE-AS 1 167 608 eine Anschlussverschraubung für Rohre beschrieben, die einesteils aus einem Anschlussstück besteht, das eine senkrecht zur Rohrachse verlaufende Stirnfläche und eine ebenso verlaufende Ringfläche zum Abstützen des Rohrendes aufweist. Des Weiteren besteht die bekannte Verschraubung anderenteils aus einer das Rohrende umfassenden und auf das Anschlussstück aufschraubbaren Überwurfmutter sowie aus einem auf dem Rohrende angeordneten gehärteten Dichtring, der sich beim Abziehen der Überwurfmutter mit einer radial nach innen gerichteten, im Bereich seines hinteren Ende angeordneten Schneidkante in die Rohraußenfläche und mit seiner stirnseitigen Ringschneide, die auch als Anschlag aufgefaßt werden könnte, in die Stirnfläche des Anschlussstückes eingräbt, wobei der an die stirnseitige Ringschneide anschließende Teil des Dichtungsringes außen durch die Wandung der an der Stirnfläche anschließenden zylindrischen Bohrung und innen durch die Außenfläche des Rohrendes mit geringem Spiel geführt ist.

Die DE-AS 1 175 639 beschreibt ein Verfahren zum Herstellen eines Dichtringes von Rohrverbindungen, welche zwischen dem Aufnahmekonus eines Anschlussstückes und einem damit zusammenwirkenden Anpressstück beim axialen Verschieben desselben mit einer harten Schneidkante in den Außenmantel des anzuschließenden Rohres einschneidet, wobei das Vorderteil des Dichtringes mittels sich drehender Walzen aus einer zylindrischen in eine kegelige Form überführt wird, bis sich eine die äußere Kante des Vorderteils überragende Nase bildet.

Die GB 1 117 987 A beschreibt eine Rohrkupplung, mit der beim Anschließen eines Rohres eine Aufweitung des Rohrendes erzielt werden kann. Diesem Zweck dient unter anderem ein als "tube-flaring sleeve" bezeichneter Ring, der mit einer radial nach innen gerichteten Schneidkante das aufzuweitende Rohr an seinem Außenumfang festhält, wenn dessen Ende beim Anschließen gegen einen konischen, als "flaring member" bezeichneten zentrisch angeordneten Aufweitungskörper drückt. Stirnseitig kommt die Rohraufweitung dabei an einer radial außen liegenden konischen Fläche einer Gegenbohrung zur Anlage. Der Ring weist stirnseitig an einem, dem Aufweitungskörper und der Gegenbohrung zugewandten Ende eine radiale Schneide und axial nach außen und nach innen gerichtete Schrägflächen mit unterschiedlichen Fasenwinkeln auf, die an die konischen Flächen von Aufweitungskörper und Gegenbohrung angepaßt sind.

Aus der US 2 406 488 ist eine Rohrverbindung mit einem Schneidring bekannt, der einen radial schräg nach innen zeigenden Flansch aufweist, welcher beim Verschrauben durch ein an ihm anliegendes Anschlusstück aus seiner ursprünglichen Schräglage in eine nahezu senkrecht zur Längsachse der Verbindung ausgerichtete Position zurückgebogen wird und dabei in den Mantel des zu verbindenden Rohres einschneidet. Der Schneidring weist außerdem an seiner Stirnfläche - außenseitig neben dem Flansch - eine axial gerichtete ringförmige Rippe auf, die beim Verschrauben als Anschlag an dem Anschlussstück zur Anlage kommt und dadurch die Biegebewegung des Flansches stoppt.

Ein metallischer Schneidring, welcher der eingangs genannten Art entspricht, ist aus der DE 33 41 726 A1 bekannt. Dieses Dokument beschreibt eine Schraubverbindung für das abdichtende Verbinden eines Rohres mit einem Rohrverbindungsteil oder Einschraubteil, bestehend aus einem Körper, der eine von einer Stirnfläche ausgehende sich kegelig zum Inneren des Körpers hin kontinuierlich verjüngende Bohrung aufweist, einer auf den Körper aufschraubbaren Mutter, die eine kegelig von dem Körper weg sich verjüngende Bohrung aufweist, und einem an seinem dem Körper zugewandten Ende mit mehreren radial nach innen gerichteten Schneiden versehenen Zwischenring, der zwischen der körperseitigen kegeligen Bohrung und der mutterseitigen kegeligen Bohrung verspannt gehalten ist. Dabei soll die Aufgabe gelöst werden, mit dem Zwischenring einen Schneidring zu schaffen, der bei hoher axialer Steifigkeit in radialer Richtung eine geringe Formänderungsarbeit aufweist. Dies wird dadurch erreicht, dass gleichmäßig auf dem Umfang eines Massivbereiches des Schneidringes verteilt, axial gerichtete Rippen angeordnet sind. Durch eine gezielte Ausbildung der Rippen kann dem Schneidring ein den jeweiligen Anforderungen angepaßtes elastisches Verhalten eingeprägt werden. Um des Weiteren zu erreichen, dass die Beendigung des Montagevorganges dem Montagepersonal definiert angezeigt wird, ist vorgesehen, dass mutterseitige kegelige Anschlagflächen des Massiv- und des Rippenbereiches in definierter Weise gegeneinander versetzt gehalten sind. Bei dem bekannten Schneidring ist am mutterseitigen Ende eine Ringwulst vorgesehen, an der sich außenseitig die Rippen befinden und in deren Bereich ein Rohranlageabschnitt gebildet ist, indem eine Innenmantelfläche dieses Bereiches die Außenmantelfläche des zu verbindenden Rohres formschlüssig umschließt.

An den Rohranlageabschnitt schließt sich in axialer Richtung auf den Körper hin ein Schneidenabschnitt an, der einen vom äußeren Umfang des Schneidringes radial nach außen weisenden, quer zur Schneidring-Längsachse verlaufenden Anschlag für das Anschlussteil aufweist. In einer Ausführungsform verläuft dabei eine Anschlagfläche des Anschlags rechtwinklig zur Längsachse des Ringes, in einer weiteren Ausführungsform schräg zur Längsachse des Ringes und geht jeweils in die genannten noch weiter radial außen liegenden Rippen über. Die Anschlagfläche wirkt bei einem Anziehen der Mutter als Anzugsbegrenzung, d.h. bei fester Anlage der Anschlagfläche an dem Anschlussteil erfährt das Anzugsdrehmoment eine sprunghafte Erhöhung, was das Ende des Montagevorgang anzeigt.

Im Gegensatz zur DE-AS 1 167 608, bei der der Schneidring federnd zwischen der Überwurfmutter und dem Anschlussstück gehalten ist und bei dem die Schneidkante für das Rohr nicht in einem vorderen, dem Anschlussstück zugekehrten Bereich angeordnet werden kann, gestattet der Schneidring gemäß der DE 33 41 726 A1, welcher der eingangs genannten Art entspricht, eine Anzugsbegrenzung bei der Montage, die als eine sogenannte Blockmontage durchgeführt werden kann, und die Anordnung einer zusätzlichen Dichtkante im vorderen Ringbereich.

Der vorliegenden Erfindung liegt die Aufgabe zugrunde, einen metallischen Schneidring der eingangs genannten Art zu schaffen, der sich bei hoher Dichtungswirkung durch eine verbesserte Montagefreundlichkeit und damit kostengünstigere Herstellungsweise der Verschraubung auszeichnet.

Erfindungsgemäß wird dies durch einen Schneidring der eingangs genannten Art erreicht, bei dem der Anschlag für das Anschlussteil eine gegenüber der Anschlagfläche hervorstehende, ringförmig umlaufende Anschlagkante aufweist.

Bei Wahrung aller Vorteile des bekannten gattungsgemäßen Schneidringes ist es durch diese erfindungsgemäße Ausführung zunächst möglich, eine Schraubverbindung zum abdichtenden Verbinden eines Rohres mit einem Anschlussteil zu schaffen, die eine erhöhte Funktionalität aufweist, da die gegenüber der Anschlagfläche hervorstehende, ringförmig umlaufende Anschlagkante eine zusätzliche Dichtkante bildet. Des Weiteren gelingt es erfindungsgemäß, den Montageaufwand bei der Herstellung der Schraubverbindung zu senken, indem durch die Anschlagkante, welche leichter deformierbar als die Anschlagfläche ist, ein Toleranzausgleich im Hinblick auf die axialen Längenmaße des Ringes bzw. des Anschlussteils geschaffen wird.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll die Erfindung genauer erläutert werden. Dabei zeigen:
- Fig. 1: einen axialen Halbschnitt durch eine Schraubverbindung mit einem erfindungsgemäßen metallischen Schneidring,
- Fig. 2: in vergrößerter Darstellung gegenüber Fig. 1, einen axialen Längsschnitt durch den erfindungsgemäßen metallischen Schneidring,
- Fig. 3: in vergrößerter Darstellung gegenüber Fig. 2, eine in Fig. 2 mit X bezeichnete Einzelheit.

In den verschiedenen Figuren der Zeichnung sind gleiche und einander entsprechende Teile stets mit denselben Bezugszeichen versehen und werden daher in der Regel auch jeweils nur einmal beschrieben.

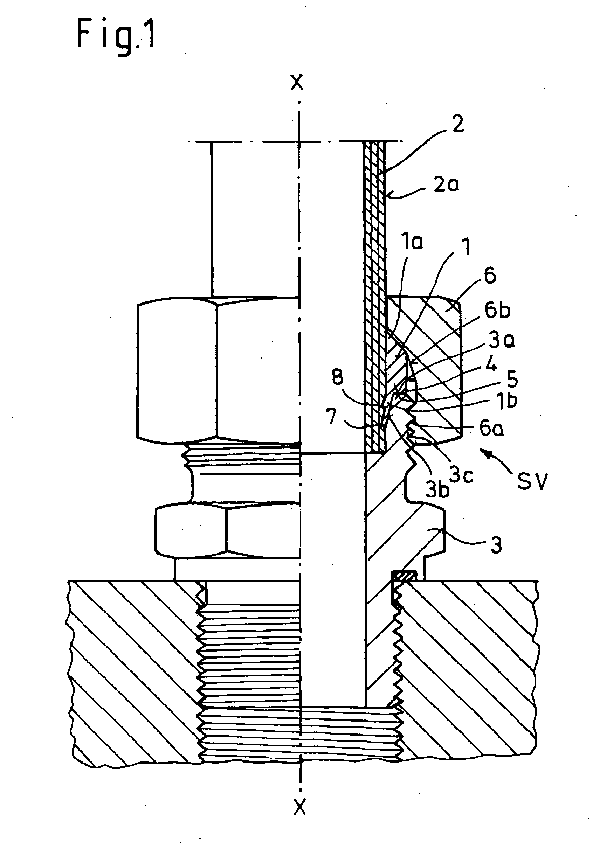

Wie sich zunächst aus Fig. 1 ergibt, ist ein erfindungsgemäßer metallischer Schneidring 1 zur Verwendung für eine Schraubverbindung SV zum abdichtenden Verbinden eines Rohres 2 mit einem Anschlussteil 3, wie einem Stutzen oder einem Einschraubteil, bestimmt.

Der Schneidring 1 weist einen Rohranlageabschnitt 1a und einen sich in axialer Richtung an den Rohranlageabschnitt 1a anschließenden Schneidenabschnitt 1b auf, wobei der Schneidenabschnitt 1 b einen vom äußeren Umfang des Schneidringes 1 radial nach außen weisenden Anschlag 4 mit einer quer zur Schneidring-Längsachse X-X verlaufenden Anschlagfläche 5 für das Anschlussteil 3, insbesondere für eine Stirnfläche 3a des Anschlussteils 3, aufweist.

Das Anschlussteil 3 ist mit einer axial verlaufenden kegeligen Bohrung 3b versehen, in die der Schneidring 1 teilweise, d.h. mit seinem Schneidenabschnitt 1b, eingreift. Eine auf das mit einem Außengewinde 3c versehene Anschlussteil 3 aufschraubbare Mutter 6 ist - anschließend an ihre Gewindebohrung 6a - ebenfalls mit einer kegeligen Bohrung 6b versehen. Der Schneidring 1 wird dabei - im Bereich seines Schneidenabschnitts 1b - zwischen der kegeligen Bohrung 3b des Anschlussteils 3 und - im Bereich seines Rohranlageabschnitts 1a - der kegeligen Bohrung 6b der Mutter 6 verspannt.

An seiner dem Anschlussteil 3 zugewandten Seite, d.h. in seinem Schneidenabschnitt 1b, ist der Schneidring 1 mit Schneiden 7, 8, insbesondere zwei Schneiden 7, 8, versehen, die sich bei Anzug der Mutter 6 unter der Wirkung der kegeligen Bohrung 3b des Anschlussteils 3 bis zum Anschlagen am Anschlag 4 axial auf das Anschlussteil 3 zu schieben und gleichzeitig radial in die Wandung 2a des zu verbindenden Rohres 2 einschneiden.

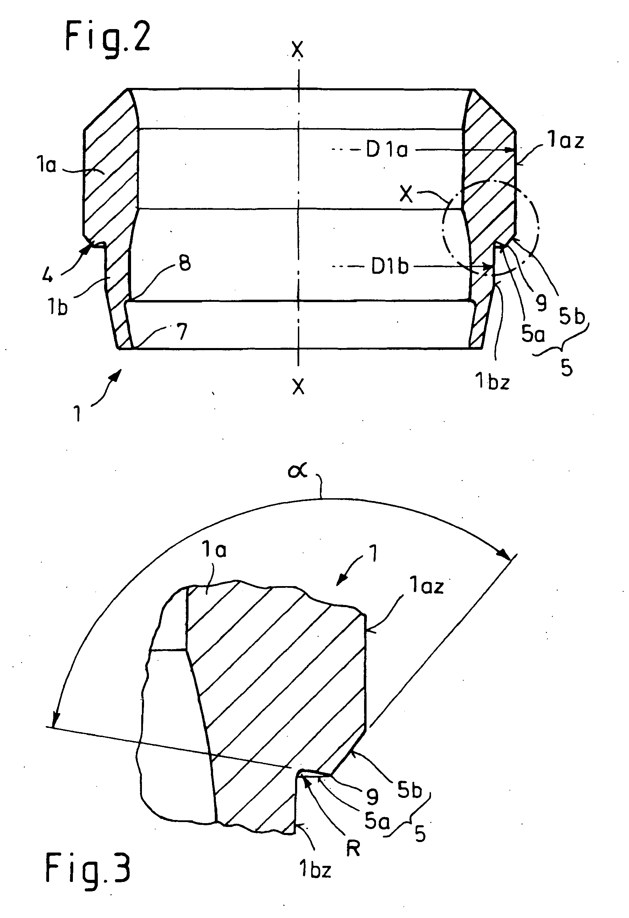

Der Anschlag 4 mit seiner quer zur Schneidring-Längsachse verlaufenden, sich radial erstreckenden Anschlagfläche 5 auf der dem Anschlussteil 3 zugewandten Seite wirkt beim Anziehen der Mutter 6 als Anzugsbegrenzung, d.h., bei fester Anlage der Anschlagfläche 5 erfährt ein zum Anziehen aufzubringendes Drehmoment eine sprunghafte Erhöhung. Erfindungsgemäß ist dabei vorgesehen, dass der Anschlag 4 für das Anschlussteil 3 eine gegenüber der Anschlagfläche 5 hervorstehende, ringförmig umlaufende Anschlagkante 9 aufweist, die in Fig. 1 nicht erkennbar, jedoch den vergrößerten Darstellungen des Schneidrings 1 in Fig. 2 und 3 zu entnehmen ist. Die Anschlagkante 9 stellt - wie bereits erwähnt - eine zusätzliche Dichtkante dar und begünstigt bei der Montage den Toleranzausgleich, insbesondere in Richtung der Längsachse X-X.

Auf der Seite der Mutter 6 stützt sich der Schneidring 1 mit seinem ringwulstartig und bevorzugt außenseitig ebenfalls konisch ausgebildeten Rohranlageabschnitt 1a außenseitig an der Mutter 6 und innenseitig auf dem Rohr 2 ab. Durch die formschlüssige Anlage an der Wandung 2a des Rohres 2 wird dabei gewährleistet, dass am Rohr 2 keine Kerbwirkungen auftreten, die die Festigkeit des Rohres 2 herabsetzen könnten.

Wie Fig. 2 und noch deutlicher Fig. 3 veranschaulichen, kann in bevorzugter Ausführung der Erfindung vorgesehen sein, dass die Anschlagkante 9 die Anschlagfläche 5 in zwei - eine innere und eine äußere - ringförmige, konzentrisch zueinander angeordnete Teilflächen 5a, 5b unterteilt, wobei die Teilflächen 5a, 5b insbesondere eine unterschiedliche Neigung zur Schneidring-Längsachse X-X aufweisen. Hierdurch kann der Anschlagkante 9 bei hoher Stabilität und Festigkeit eine im Hinblick auf das Anschlagen und das dabei erfolgende Abdichten optimale Konturgestaltung verliehen werden.

Fig. 3 zeigt insbesondere, dass die innere Teilfläche 5a sich in Richtung auf das Anschlussteil 3 hin konisch erweitert, während die äußere Teilfläche 5b sich in Richtung auf das Anschlussteil 3 hin konisch verjüngt, so dass zwischen den Teilflächen 5a, 5b ein stumpfer Winkel α eingeschlossen ist. Durch die Wahl dieses Winkels α kann das Andruckverhalten der Anschlagkante 9 an der Stirnfläche 3a des Anschlussteils 3, z.B. der Anstieg des Anzugsmoments nach Erreichen des Anschlags 4, in vorbestimmter Weise festgelegt werden.

Die Erfindung ist nicht auf das dargestellte Ausführungsbeispiel beschränkt, sondern umfaßt auch alle im Sinne der Erfindung gleichwirkenden Ausführungen. Insbesondere sind auch andere Ausführungen der Anschlagfläche 5 und der Anschlagkante 9 möglich, insofern beispielsweise die Anschlagkante 9 durch die Variation des Winkel α oder durch eine mögliche geringfügige Abrundung der Kantenspitze mehr oder weniger stumpf gestaltet werden kann.

Insbesondere was die Neigung der inneren Teilfläche 5a zur Schneidring-Längsachse X-X betrifft, so kann diese nur wenig, insbesondere weniger als die Neigung der äußeren Teilfläche 5b, z.B. maximal um bis zu 25°, bevorzugt um weniger als 15°, von einem rechtwinkligen Verlauf abweichen. Hierbei kann an einer Kehle, die durch einen Rücksprung des Außendurchmessers D1a eines vorzugsweise zylindrisch gestalteten Bereichs 1az der Außenkontur des Rohranlageabschnitts 1a gegenüber dem Außendurchmesser D1b eines vorzugsweise ebenfalls zylindrisch gestalteten Bereichs 1bz der Außenkontur des Schneidenabschnitts 1 b entsteht, eine Verrundung R vorgesehen sein, was zu einer Optimierung des Verlaufs der mechanischen Spannungen im montierten Schneidring 1 führt.

### Bezugszeichen

- 1: Schneidring
- 1 a: Rohranlageabschnitt von 1
- 1 b: Schneidenabschnitt von 1
- 1az: zylindrischer Bereich von 1a
- 1 bz: zylindrischer Bereich von 1 b
- 2: Rohr
- 2a: Wandung von 2
- 3: Anschlussteil
- 3a: Stirnfläche von 3
- 3b: kegelige Bohrung in 3
- 3c: Außengewinde von 3
- 4: Anschlag an 1
- 5: Anschlagfläche von 4
- 5a: innere Teilfläche von 5
- 5b: äußere Teilfläche von 5
- 6: Mutter
- 6a: Gewindebohrung in 6
- 6b: kegelige Bohrung in 6
- 7,8: Schneiden von 1
- 9: Anschlagkante von 4

- D1a: Außendurchmesser von 1 az
- D1b: Außendurchmesser von 1 bz
- R: Verrundung
- SV: Schraubverbindung aus 1, 2, 3
- X-X: Längsachse von 1, SV

- α: Winkel zwischen 5a und 5b

## Patentansprüche

1. Metallischer Schneidring (1) für eine Schraubverbindung (SV) zum abdichtenden Verbinden eines Rohres (2) mit einem Anschlussteil (3), mit einem Rohranlageabschnitt (1a) und einem sich in axialer Richtung an den Rohranlageabschnitt (1a) anschließenden Schneidenabschnitt (1 b) mit im wesentlichen zylindrischer Außenkontur, die durch einen Außendurchmesser (D1b) des Schneidenabschnitts (1b) beschrieben ist, wobei der Schneidenabschnitt (1b) auf seiner dem Anschlussteil (3) zugewandten Seite Schneiden (7, 8) und auf seiner dem Rohranlageabschnitt (1a) zugewandten Seite einen, von dem durch den Außendurchmesser (D1b) beschriebenen Umfang des Schneidringes (1) radial nach außen weisenden Anschlag (4) mit einer quer zur Schneidring-Längsachse (X-X) verlaufenden Anschlagfläche (5) für das Anschlussteil (3) aufweist,
**dadurch gekennzeichnet, dass** der Anschlag (4) für das Anschlussteil (3) eine gegenüber der Anschlagfläche (5) hervorstehende, ringförmig umlaufende Anschlagkante (9) aufweist.

2. Schneidring nach Anspruch 1,
**dadurch gekennzeichnet, dass** die Anschlagkante (9) die Anschlagfläche (5) in zwei - eine innere und eine äußere - ringförmige, konzentrisch zueinander angeordnete Teilflächen (5a, 5b) unterteilt.

3. Schneidring nach Anspruch 2,
**dadurch gekennzeichnet , dass** die Teilflächen (5a, 5b) eine unterschiedliche Neigung zur Schneidring-Längsachse (X-X) aufweisen.

4. Schneidring nach Anspruch 2 oder 3,
**dadurch gekennzeichnet , dass** die innere Teilfläche (5a) sich in Richtung auf das Anschlussteil (3) hin konisch erweitert.

5. Schneidring nach einem der Ansprüche 2 bis 4,
**dadurch gekennzeichnet, dass** die äußere Teilfläche (5b) sich in Richtung auf das Anschlussteil (3) hin konisch verjüngt.

6. Schneidring nach einem der Ansprüche 2 bis 5,
**dadurch gekennzeichnet, dass** eine/die Neigung der inneren Teilfläche (5a) zur Schneidring-Längsachse (X-X) maximal um bis zu 25°, insbesondere um weniger als 15° von einem rechtwinkligen Verlauf zur Schneidring-Längsachse (X-X) abweicht.

## Claims

1. Metallic cutting ring (1) for a screwed connection (SV) for the sealing connection of a pipe (2) to a connecting part (3), having a pipe contact section (1a) and a cutting section (1b) which adjoins the pipe contact section (1a) in the axial direction and has a substantially cylindrical outer contour which is described by an outside diameter (D1b) of the cutting section (1b), the cutting section (1b) having, on its side facing the connecting part (3), cutting edges (7, 8) and, on its side facing the pipe contact section (1a), a stop (4) which points radially outwards from the cutting-ring (1) circumference described by the outside diameter (D1b) and has a stop surface (5), running transversely with respect to the cutting-ring longitudinal axis (X-X), for the connecting part (3) ,
**characterised in that** the stop (4) for the connecting part (3) has an annularly encircling stop edge (9) projecting relative to the stop surface (5).

2. Cutting ring according to Claim 1,
**characterised in that** the stop edge (9) divides the stop surface (5) into two - one inner and one outer - annular partial surfaces (5a, 5b) arranged concentrically with respect to one another.

3. Cutting ring according to Claim 2,
**characterised in that** the partial surfaces (5a, 5b) have a different inclination with respect to the cutting-ring longitudinal axis (X-X).

4. Cutting ring according to Claim 2 or 3,
**characterised in that** the inner partial surface (5a) widens conically in the direction of the connecting part (3).

5. Cutting ring according to one of Claims 2 to 4,
**characterised in that** the outer partial surface (5b) narrows conically in the direction of the connecting part (3).

6. Cutting ring according to one of Claims 2 to 5,
**characterised in that** an/the inclination of the inner partial surface (5a) with respect to the cutting-ring longitudinal axis (X-X) deviates at most by up to 25°, in particular by less than 15°, from a right-angled course with respect to the cutting-ring longitudinal axis (X-X).

## Revendications

1. Bague coupante (1) métallique pour un assemblage vissé (SV) pour le raccordement étanche d'un tube (2) à un élément de raccordement (3), comportant une partie d'appui (1a) en appui contre le tube et une partie coupante (1b), adjacente à la partie d'appui (1a) dans la direction axiale et ayant un contour extérieur sensiblement cylindrique, qui est défini par un diamètre extérieur (D1b) de la partie coupante (1b), la partie coupante (1b) comportant, sur son côté orienté vers l'élément de raccordement (3), des arêtes de coupe (7, 8) et, sur son côté orienté vers la partie d'appui (1a), une butée (4), orientée radialement vers l'extérieur sur le pourtour, définie par le diamètre extérieur (Dlb), de la bague coupante (1) et munie d'une surface de butée (5) pour l'élément de raccordement (3), laquelle est orientée transversalement à l'axe longitudinal (X-X) de la bague coupante,
**caractérisée en ce que** la butée (4) pour l'élément de raccordement (3) comporte un bord de butée (9) périphérique annulaire, en saillie par rapport à la surface de butée (5).

2. Bague coupante selon la revendication 1, **caractérisée en ce que** le bord de butée (9) divise la surface de butée (5) en deux surfaces partielles (5a, 5b) - une intérieure et une extérieure - annulaires, disposées concentriquement l'une à l'autre.

3. Bague coupante selon la revendication 2, **caractérisée en ce que** les surfaces partielles (5a, 5b) ont une inclinaison différente par rapport à l'axe longitudinal (X-X) de la bague coupante.

4. Bague coupante selon la revendication 2 ou 3, **caractérisée en ce que** la surface partielle intérieure (5a) s'élargit de manière conique vers l'élément de raccordement (3).

5. Bague coupante selon l'une quelconque des revendications 2 à 4, **caractérisée en ce que** la surface partielle extérieure (5b) se rétrécit de manière conique vers l'élément de raccordement (3).

6. Bague coupante selon l'une quelconque des revendications 2 à 5, **caractérisée en ce qu'**une inclinaison ou l'inclinaison de la surface partielle intérieure (5a) par rapport à l'axe longitudinal (X-X) de la bague coupante s'écarte au maximum jusqu'à 25°, en particulier de moins de 15°, d'un tracé perpendiculaire à l'axe longitudinal (X-X) de la bague coupante.
